# EUROPEAN PATENT SPECIFICATION

(11) **EP 3 906 147 B1**
(45) Date of publication and mention of the grant of the patent: **27.09.2023**
(21) Application number: 19839162.5
(22) Date of filing: 31.12.2019
(51) Int. Cl.: B29C 64/112, B29C 64/165, B29C 64/209, B29C 64/393, B33Y 10/00, B33Y 30/00

(54) **METHOD AND SYSTEM FOR IMPROVING COLOR UNIFORMITY IN INKJET PRINTING**
VERFAHREN UND SYSTEM ZUR VERBESSERUNG DER FARBGLEICHMÄSSIGKEIT BEIM TINTENSTRAHLDRUCK
PROCÉDÉ ET SYSTÈME D'AMÉLIORATION DE L'UNIFORMITÉ DES COULEURS DANS L'IMPRESSION À JET D'ENCRE

(30) Priority: 31.12.2018 US 201862786555 P
(43) Date of publication of application: 10.11.2021
(73) Proprietor: Stratasys Ltd., 7612401 Rehovot (IL)
(72) Inventor: LIBINSON, Alexander, 5849519 Holon (IL)
(74) Representative: Kramer, Dani
(86) International application number: PCT/IL2019/051445
(87) International publication number: WO 2020/141524

(56) References cited:
- US-A1- 2017 282 535
- US-B2- 9 211 699

## Description

### FIELD AND BACKGROUND OF THE INVENTION

The present invention, in some embodiments thereof, relates to inkjet printing, and, more particularly, but not exclusively, to a method and system for improving color uniformity in inkjet printing, such as, but not limited to, three-dimensional inkjet printing.

Additive manufacturing (AM) is a technology enabling fabrication of arbitrarily shaped structures directly from computer data via additive formation steps. The basic operation of any AM system consists of slicing a three-dimensional computer model into thin cross sections, translating the result into two-dimensional position data and feeding the data to control equipment which fabricates a three-dimensional structure in a layerwise manner.

Additive manufacturing entails many different approaches to the method of fabrication, including three-dimensional (3D) printing such as 3D inkjet printing, electron beam melting, stereolithography, selective laser sintering, laminated object manufacturing, fused deposition modeling and others.

Some 3D printing processes, for example, 3D inkjet printing, are being performed by a layer by layer inkjet deposition of building materials. Thus, a building material is dispensed from a dispensing head having a set of nozzles to deposit layers on a supporting structure. Depending on the building material, the layers may then be cured or solidified using a suitable device.

The document US 2017/282535 A1 relates to a device that detects abnormality of an image caused by abnormality of a nozzle in an inkjet head and a correcting device that performs correction by making a part of a plurality of nozzles non-ejectable based on a detection result of the abnormality and by compensating for it by another nozzle.

### SUMMARY OF THE INVENTION

According to an aspect of some embodiments of the present invention, as disclosed in claim 1, there is provided a method of printing using an inkjet printing system, as disclosed in claim 9, having plurality of arrays of nozzles. The method comprises: detecting a defective nozzle in a first array of nozzles; disabling a nozzle in a second array of nozzles; dispensing a first material formulation from nozzles of the first array, other than the defective nozzle; and dispensing a second material formulation from nozzles of the second array, other than the disabled nozzle.

According to some embodiments of the invention the method comprises selecting the nozzle in the second array so as to locally maintain a ratio between the first and the second material formulations.

According to the claimed invention of the invention a location of the defective nozzle along the first array, and a location of the disabled nozzle along the second array of nozzles, are within 0 to 5 array pitch units from each other.

According to some embodiments of the invention the method comprises detecting a plurality of defective nozzles in the first array of nozzles, disabling a plurality of nozzles in the second array of nozzles; dispensing the first material formulation from nozzles of the first array, other than the defective nozzles; and dispensing the second material formulation from nozzles of the second array, other than the disabled nozzles.

According to some embodiments of the invention the first material formulation and the second material formulation are of different colors.

According to some embodiments of the invention the first material formulation and the second material formulation have different mechanical properties.

According to some embodiments of the invention the first material formulation and the second material formulation have different electrical properties.

According to some embodiments of the invention the first material formulation and the second material formulation have different magnetic properties.

According to some embodiments of the invention the dispensing of the first material formulation, and the dispensing of the second material formulation is in an interlaced manner.

According to some embodiments of the invention the first array of nozzles and the second array of nozzles are both located in one dispensing head.

According to some embodiments of the invention the first array of nozzles is located in a first dispensing head, and the second array of nozzles is located in a second dispensing head.

According to some embodiments of the invention the method comprises detecting an additional defective nozzle intermittently with the dispensing of the first and the second material formulations.

According to some embodiments of the invention the detection is executed automatically by an optical scanner.

According to some embodiments of the invention the inkjet printing system is a three-dimensional inkjet printing system, and the first and the second material formulations, are respectively a first and a second building material formulations.

According to some embodiments of the invention the inkjet printing system is a two-dimensional inkjet printing system, and the first and the second material formulations, are respectively a first and a second ink material formulations.

According to an aspect of some embodiments of the present invention there is provided an inkjet printing system according to claim 9.

The system comprises: a plurality of arrays of nozzles; and a controller configured for receiving information pertaining to a defective nozzle in a first array of nozzles, for disabling a nozzle in a second array of nozzles, and for controlling the first array to dispense a first material formulation from nozzles of the first array, other than the defective nozzle, and for controlling the second array to dispense a second material formulation from nozzles of the second array, other than the disabled nozzle.

According to some embodiments of the invention the system comprises: an optical scanner; and an image processor configured for receiving scans from the optical scanner, processing the scans to detect the defective nozzle in the first array of nozzles, and transmitting the information to the controller.

According to some embodiments of the present invention the controller is configured for selecting the nozzle in the second array so as to locally maintain a ratio between the first and the second material formulations.

According to the claimed invention a location of the defective nozzle along the first array, and a location of the disabled nozzle along the second array of nozzles, are within 0 to 5 array pitch units from each other.

According to some embodiments of the present invention the controller is configured for detecting a plurality of defective nozzles in the first array of nozzles, disabling a plurality of nozzles in the second array of nozzles; dispensing the first material formulation from nozzles of the first array, other than the defective nozzles; and dispensing the second material formulation from nozzles of the second array, other than the disabled nozzles.

According to some embodiments of the present invention the first array of nozzles and the second array of nozzles are both located in one dispensing head.

According to some embodiments of the present invention the first array of nozzles is located in a first dispensing head, and the second array of nozzles is located in a second dispensing head.

According to some embodiments of the present invention the controller is configured for detecting an additional defective nozzle intermittently with the dispensing of the first and the second material formulations.

According to some embodiments of the present invention the system is a three-dimensional inkjet printing system, wherein the first and the second material formulations, are respectively a first and a second building material formulations.

According to some embodiments of the present invention the system is a two-dimensional inkjet printing system, and the first and the second material formulations, are respectively a first and a second ink material formulations.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIGs. 1A-D are schematic illustrations of an additive manufacturing system according to some embodiments of the invention;
FIGs. 2A-2C are schematic illustrations of printing heads according to some embodiments of the present invention;
FIGs. 3A and 3B are schematic illustrations demonstrating coordinate transformations according to some embodiments of the present invention;
FIG. 4 is a schematic illustration of an array of nozzles, and a top view of a layer formed by the array;
FIG. 5 is a schematic illustration of two arrays of nozzles, and a top view of a layer formed by the two arrays, according to some embodiments of the present invention;
FIG. 6 is a flowchart diagram of a printing method, according to some exemplary embodiments of the present invention; and
FIG. 7 shows results of experiments performed according to some embodiments of the present invention for improving color uniformity.

### DESCRIPTION OF SPECIFIC EMBODIMENTS OF THE INVENTION

The present invention, in some embodiments thereof, relates to inkjet printing, and, more particularly, but not exclusively, to a method and system for improving color uniformity in inkjet printing, such as, but not limited to, three-dimensional inkjet printing.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The method and system of the present embodiments manufacture three-dimensional objects based on computer object data in a layerwise manner by forming a plurality of layers in a configured pattern corresponding to the shape of the objects. The computer object data can be in any known format, including, without limitation, a Standard Tessellation Language (STL) or a StereoLithography Contour (SLC) format, an OBJ File format (OBJ), a 3D Manufacturing Format (3MF), an OBJ File format (OBJ), a 3D Manufacturing Format (3MF), Virtual Reality Modeling Language (VRML), Additive Manufacturing File (AMF) format, Drawing Exchange Format (DXF), Polygon File Format (PLY) or any other format suitable for Computer-Aided Design (CAD).

The term "object" as used herein refers to a whole object or a part thereof.

Each layer is formed by an additive manufacturing apparatus which scans a two-dimensional surface and patterns it. While scanning, the apparatus visits a plurality of target locations on the two-dimensional layer or surface, and decides, for each target location or a group of target locations, whether or not the target location or group of target locations is to be occupied by building material formulation, and which type of building material formulation is to be delivered thereto. The decision is made according to a computer image of the surface.

In preferred embodiments of the present invention the AM comprises three-dimensional printing, more preferably three-dimensional inkjet printing. In these embodiments a building material formulation is dispensed from a printing head having one or more arrays of nozzles to deposit building material formulation in layers on a supporting structure. The AM apparatus thus dispenses building material formulation in target locations which are to be occupied and leaves other target locations void. The apparatus typically includes a plurality of arrays of nozzles, each of which can be configured to dispense a different building material formulation. Thus, different target locations can be occupied by different building material formulations. The types of building material formulations can be categorized into two major categories: modeling material formulation and support material formulation. The support material formulation serves as a supporting matrix or construction for supporting the object or object parts during the fabrication process and/or other purposes, e.g., providing hollow or porous objects. Support constructions may additionally include modeling material formulation elements, e.g. for further support strength.

The modeling material formulation is generally a composition which is formulated for use in additive manufacturing and which is able to form a three-dimensional object on its own, *i.e.,* without having to be mixed or combined with any other substance.

The final three-dimensional object is made of the modeling material formulation or a combination of modeling material formulations or modeling and support material formulations or modification thereof (e.g., following curing). All these operations are well-known to those skilled in the art of solid freeform fabrication.

In some exemplary embodiments of the invention an object is manufactured by dispensing two or more different modeling material formulations, each material formulation from a different array of nozzles (belonging to the same or different printing heads) of the AM apparatus. In some embodiments, two or more such arrays of nozzles that dispense different modeling material formulations are both located in the same printing head of the AM apparatus. In some embodiments, arrays of nozzles that dispense different modeling material formulations are located in separate printing heads, for example, a first array of nozzles dispensing a first modeling material formulation is located in a first printing head, and a second array of nozzles dispensing a second modeling material formulation is located in a second printing head.

In some embodiments, an array of nozzles that dispense a modeling material formulation and an array of nozzles that dispense a support material formulation are both located in the same printing head. In some embodiments, an array of nozzles that dispense a modeling material formulation and an array of nozzles that dispense a support material formulation are both located in separate the same printing head.

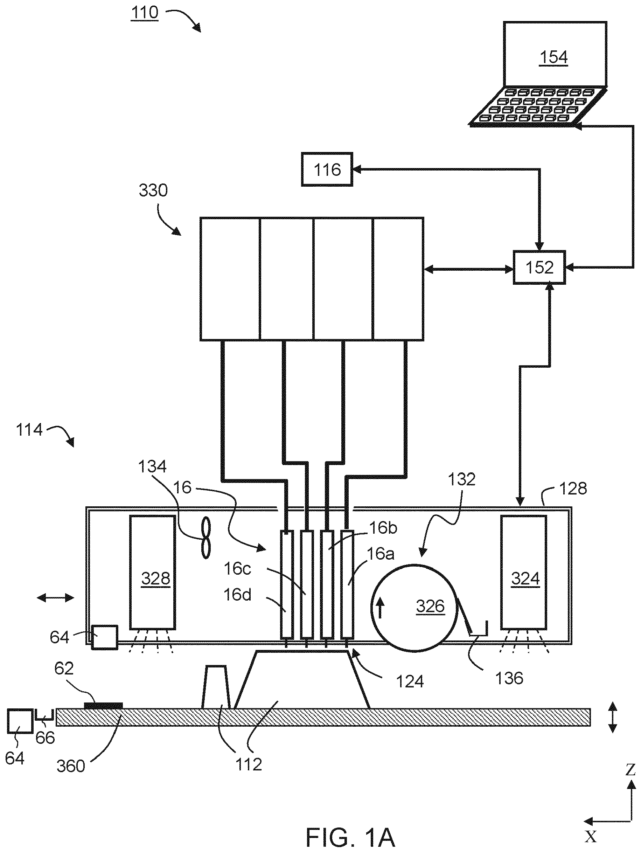

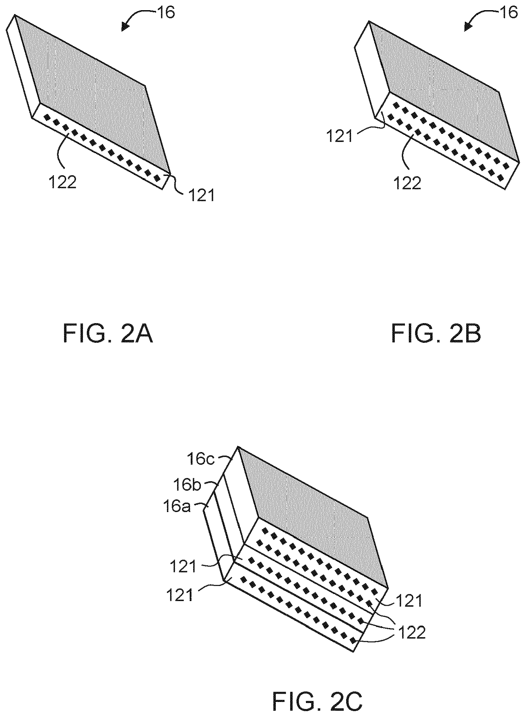

A representative and non-limiting example of a system **110** suitable for AM of an object **112** according to some embodiments of the present invention is illustrated in FIG. 1A. System **110** comprises an additive manufacturing apparatus **114** having a dispensing unit **16** which comprises a plurality of printing heads. Each head preferably comprises one or more arrays of nozzles **122,** typically mounted on an orifice plate **121,** as illustrated in FIGs. 2A-C described below, through which a liquid building material formulation **124** is dispensed.

Preferably, but not obligatorily, apparatus **114** is a three-dimensional printing apparatus, in which case the printing heads are printing heads, and the building material formulation is dispensed via inkjet technology. This need not necessarily be the case, since, for some applications, it may not be necessary for the additive manufacturing apparatus to employ three-dimensional printing techniques. Representative examples of additive manufacturing apparatus contemplated according to various exemplary embodiments of the present invention include, without limitation, fused deposition modeling apparatus and fused material formulation deposition apparatus.

Each printing head is optionally and preferably fed via one or more building material formulation reservoirs which may optionally include a temperature control unit *(e.g.,* a temperature sensor and/or a heating device), and a material formulation level sensor. To dispense the building material formulation, a voltage signal is applied to the printing heads to selectively deposit droplets of material formulation via the printing head nozzles, for example, as in piezoelectric inkjet printing technology. Another example includes thermal inkjet printing heads. In these types of heads, there are heater elements in thermal contact with the building material formulation, for heating the building material formulation to form gas bubbles therein, upon activation of the heater elements by a voltage signal. The gas bubbles generate pressures in the building material formulation, causing droplets of building material formulation to be ejected through the nozzles. Piezoelectric and thermal printing heads are known to those skilled in the art of solid freeform fabrication. For any types of inkjet printing heads, the dispensing rate of the head depends on the number of nozzles, the type of nozzles and the applied voltage signal rate (frequency).

Preferably, but not obligatorily, the overall number of dispensing nozzles or nozzle arrays is selected such that half of the dispensing nozzles are designated to dispense support material formulation and half of the dispensing nozzles are designated to dispense modeling material formulation, i.e. the number of nozzles jetting modeling material formulations is the same as the number of nozzles jetting support material formulation. In the representative example of FIG. 1A, four printing heads **16a, 16b, 16c** and **16d** are illustrated. Each of heads **16a, 16b, 16c** and **16d** has a nozzle array. In this Example, heads **16a** and **16b** can be designated for modeling material formulation/s and heads **16c** and **16d** can be designated for support material formulation. Thus, head **16a** can dispense one modeling material formulation, head **16b** can dispense another modeling material formulation and heads **16c** and **16d** can both dispense support material formulation. In an alternative embodiment, heads **16c** and **16d,** for example, may be combined in a single head having two nozzle arrays for depositing support material formulation. In a further alternative embodiment any one or more of the printing heads may have more than one nozzle arrays for depositing more than one material formulation, e.g. two nozzle arrays for depositing two different modeling material formulations or a modeling material formulation and a support material formulation, each formulation via a different array or number of nozzles.

Yet it is to be understood that it is not intended to limit the scope of the present invention and that the number of modeling material formulation printing heads (modeling heads) and the number of support material formulation printing heads (support heads) may differ. Generally, the number of arrays of nozzles that dispense modeling material formulation, the number of arrays of nozzles that dispense support material formulation, and the number of nozzles in each respective array are selected such as to provide a predetermined ratio, *a*, between the maximal dispensing rate of the support material formulation and the maximal dispensing rate of modeling material formulation. The value of the predetermined ratio, *a*, is preferably selected to ensure that in each formed layer, the height of modeling material formulation equals the height of support material formulation. Typical values for *a* are from about 0.6 to about 1.5.

As used herein throughout the term "about" refers to ± 10 %.

For example, for *a* = 1, the overall dispensing rate of support material formulation is generally the same as the overall dispensing rate of the modeling material formulation when all the arrays of nozzles operate.

Apparatus **114** can comprise, for example, M modeling heads each having m arrays of p nozzles, and S support heads each having s arrays of q nozzles such that M×m×p = S×s×q. Each of the M×m modeling arrays and S×s support arrays can be manufactured as a separate physical unit, which can be assembled and disassembled from the group of arrays. In this embodiment, each such array optionally and preferably comprises a temperature control unit and a material formulation level sensor of its own, and receives an individually controlled voltage for its operation.

Apparatus **114** can further comprise a solidifying device **324** which can include any device configured to emit light, heat or the like that may cause the deposited material formulation to harden. For example, solidifying device **324** can comprise one or more radiation sources, which can be, for example, an ultraviolet or visible or infrared lamp, or other sources of electromagnetic radiation, or electron beam source, depending on the modeling material formulation being used. In some embodiments of the present invention, solidifying device **324** serves for curing or solidifying the modeling material formulation.

In addition to solidifying device **324,** apparatus **114** optionally and preferably comprises an additional radiation source **328** for solvent evaporation. Radiation source **328** optionally and preferably generates infrared radiation. In various exemplary embodiments of the invention solidifying device **324** comprises a radiation source generating ultraviolet radiation, and radiation source **328** generates infrared radiation.

In some embodiments of the present invention apparatus **114** comprises cooling system **134** such as one or more fans or the like.

The printing head(s) and radiation source are preferably mounted in a frame or block **128** which is preferably operative to reciprocally move over a tray **360,** which serves as the working surface. In some embodiments of the present invention the radiation sources are mounted in the block such that they follow in the wake of the printing heads to at least partially cure or solidify the material formulations just dispensed by the printing heads. Tray **360** is positioned horizontally. According to the common conventions an X-Y-Z Cartesian coordinate system is selected such that the X-Y plane is parallel to tray **360.** Tray **360** is preferably configured to move vertically (along the Z direction), typically downward. In various exemplary embodiments of the invention, apparatus **114** further comprises one or more leveling devices **132,** e.g. a roller **326.** Leveling device **326** serves to straighten, level and/or establish a thickness of the newly formed layer prior to the formation of the successive layer thereon. Leveling device **326** preferably comprises a waste collection device **136** for collecting the excess material formulation generated during leveling. Waste collection device **136** may comprise any mechanism that delivers the material formulation to a waste tank or waste cartridge.

In use, the printing heads of unit **16** move in a scanning direction, which is referred to herein as the X direction, and selectively dispense building material formulation in a predetermined configuration in the course of their passage over tray **360.** The building material formulation typically comprises one or more types of support material formulation and one or more types of modeling material formulation. The passage of the printing heads of unit **16** is followed by the curing of the modeling material formulation(s) by radiation source **126.** In the reverse passage of the heads, back to their starting point for the layer just deposited, an additional dispensing of building material formulation may be carried out, according to predetermined configuration. In the forward and/or reverse passages of the printing heads, the layer thus formed may be straightened by leveling device **326,** which preferably follows the path of the printing heads in their forward and/or reverse movement. Once the printing heads return to their starting point along the X direction, they may move to another position along an indexing direction, referred to herein as the Y direction, and continue to build the same layer by reciprocal movement along the X direction. Alternately, the printing heads may move in the Y direction between forward and reverse movements or after more than one forward-reverse movement. The series of scans performed by the printing heads to complete a single layer is referred to herein as a single scan cycle.

Once the layer is completed, tray **360** is lowered in the Z direction to a predetermined Z level, according to the desired thickness of the layer subsequently to be printed. The procedure is repeated to form three-dimensional object **112** in a layerwise manner.

In another embodiment, tray **360** may be displaced in the Z direction between forward and reverse passages of the printing head of unit **16,** within the layer. Such Z displacement is carried out in order to cause contact of the leveling device with the surface in one direction and prevent contact in the other direction.

System **110** optionally and preferably comprises a building material formulation supply system **330** which comprises the building material formulation containers or cartridges and supplies a plurality of building material formulations to fabrication apparatus **114.**

A control unit **152** controls fabrication apparatus **114** and optionally and preferably also supply system **330.** Control unit **152** typically includes an electronic circuit configured to perform the controlling operations. Control unit **152** preferably communicates with a data processor **154** which transmits digital data pertaining to fabrication instructions based on computer object data, *e.g.,* a CAD configuration represented on a computer readable medium in a form of a Standard Tessellation Language (STL) format or the like. Typically, control unit **152** controls the voltage applied to each printing head or each nozzle array and the temperature of the building material formulation in the respective printing head or respective nozzle array.

Once the manufacturing data is loaded to control unit **152** it can operate without user intervention. In some embodiments, control unit **152** receives additional input from the operator, *e.g.*, using data processor **154** or using a user interface **116** communicating with unit **152.** User interface **116** can be of any type known in the art, such as, but not limited to, a keyboard, a touch screen and the like. For example, control unit **152** can receive, as additional input, one or more building material formulation types and/or attributes, such as, but not limited to, color, characteristic distortion and/or transition temperature, viscosity, electrical property, magnetic property. Other attributes and groups of attributes are also contemplated.

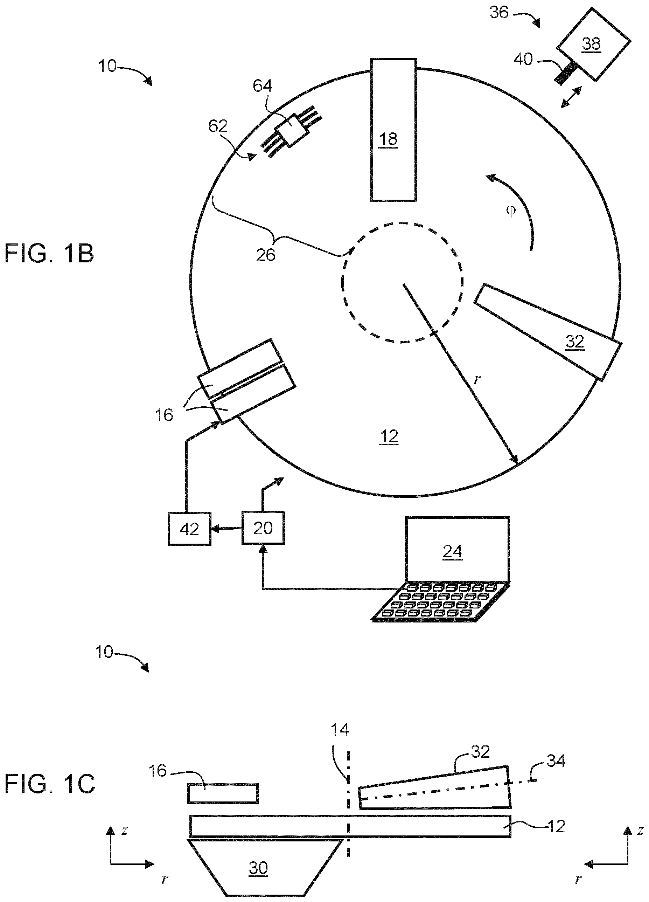

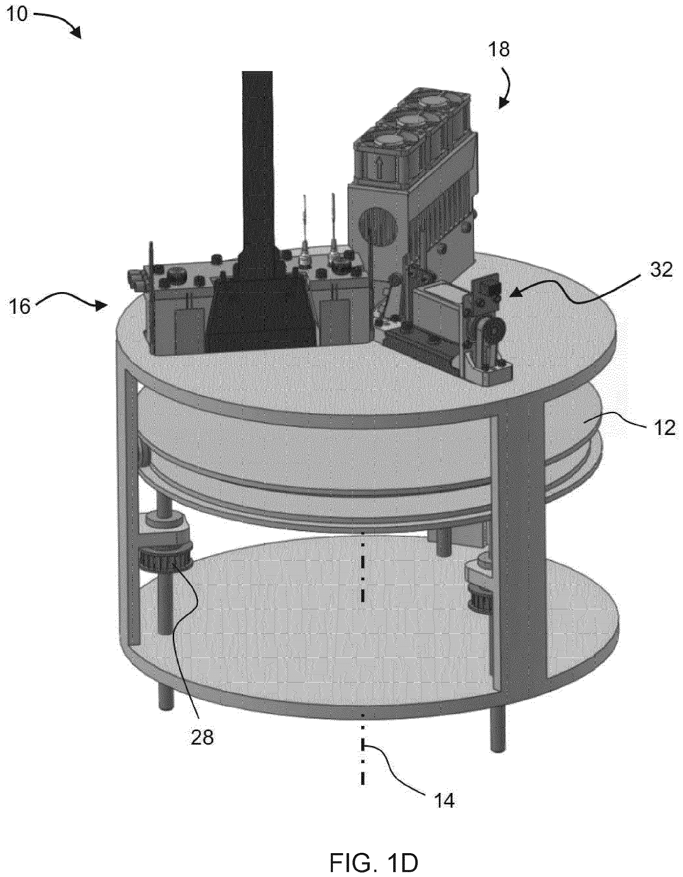

Another representative and non-limiting example of a system **10** suitable for AM of an object according to some embodiments of the present invention is illustrated in FIGs. 1B-D. FIGs. 1B-D illustrate a top view (FIG. 1B), a side view (FIG. 1C) and an isometric view (FIG. 1D) of system **10.**

In the present embodiments, system **10** comprises a tray **12** and a plurality of inkjet printing heads **16,** each having one or more arrays of nozzles with respective one or more pluralities of separated nozzles. Tray **12** can have a shape of a disk or it can be annular. Non-round shapes are also contemplated, provided they can be rotated about a vertical axis.

Tray **12** and heads **16** are optionally and preferably mounted such as to allow a relative rotary motion between tray **12** and heads **16.** This can be achieved by (i) configuring tray **12** to rotate about a vertical axis **14** relative to heads **16,** (ii) configuring heads **16** to rotate about vertical axis **14** relative to tray **12,** or (iii) configuring both tray **12** and heads **16** to rotate about vertical axis **14** but at different rotation velocities (*e.g.*, rotation at opposite direction). While some embodiments of system **10** are described below with a particular emphasis to configuration (i) wherein the tray is a rotary tray that is configured to rotate about vertical axis **14** relative to heads **16,** it is to be understood that the present application contemplates also configurations (ii) and (iii) for system **10.** Any one of the embodiments of system **10** described herein can be adjusted to be applicable to any of configurations (ii) and (iii), and one of ordinary skills in the art, provided with the details described herein, would know how to make such adjustment.

In the following description, a direction parallel to tray **12** and pointing outwardly from axis **14** is referred to as the radial direction *r*, a direction parallel to tray **12** and perpendicular to the radial direction *r* is referred to herein as the azimuthal direction ϕ, and a direction perpendicular to tray **12** is referred to herein is the vertical direction z.

The radial direction *r* in system **10** enacts the indexing direction y in system **110,** and the azimuthal direction ϕ enacts the scanning direction x in system **110.** Therefore, the radial direction is interchangeable referred to herein as the indexing direction, and the azimuthal direction is interchangeable referred to herein as the scanning direction.

The term "radial position," as used herein, refers to a position on or above tray **12** at a specific distance from axis **14.** When the term is used in connection to a printing head, the term refers to a position of the head which is at specific distance from axis **14.** When the term is used in connection to a point on tray **12,** the term corresponds to any point that belongs to a locus of points that is a circle whose radius is the specific distance from axis **14** and whose center is at axis **14.**

The term "azimuthal position," as used herein, refers to a position on or above tray **12** at a specific azimuthal angle relative to a predetermined reference point. Thus, radial position refers to any point that belongs to a locus of points that is a straight line forming the specific azimuthal angle relative to the reference point.

The term "vertical position," as used herein, refers to a position over a plane that intersect the vertical axis **14** at a specific point.

Tray **12** serves as a building platform for three-dimensional printing. The working area on which one or objects are printed is typically, but not necessarily, smaller than the total area of tray **12.** In some embodiments of the present invention the working area is annular. The working area is shown at **26.** In some embodiments of the present invention tray **12** rotates continuously in the same direction throughout the formation of object, and in some embodiments of the present invention tray reverses the direction of rotation at least once (*e.g.,* in an oscillatory manner) during the formation of the object. Tray **12** is optionally and preferably removable. Removing tray **12** can be for maintenance of system **10,** or, if desired, for replacing the tray before printing a new object. In some embodiments of the present invention system **10** is provided with one or more different replacement trays (*e.g.,* a kit of replacement trays), wherein two or more trays are designated for different types of objects (*e.g.,* different weights) different operation modes (*e.g.,* different rotation speeds), *etc.* The replacement of tray **12** can be manual or automatic, as desired. When automatic replacement is employed, system **10** comprises a tray replacement device **36** configured for removing tray **12** from its position below heads **16** and replacing it by a replacement tray (not shown). In the representative illustration of FIG. 1B tray replacement device **36** is illustrated as a drive **38** with a movable arm **40** configured to pull tray **12,** but other types of tray replacement devices are also contemplated.

Exemplified embodiments for the printing head **16** are illustrated in FIGs. 2A-2C. These embodiments can be employed for any of the AM systems described above, including, without limitation, system **110** and system **10.**

FIGs. 2A-B illustrate a printing head **16** with one (FIG. 2A) and two (FIG. 2B) nozzle arrays **22.** The nozzles in the array are aligned linearly, along a straight line. According to the claimed invention, a printing head has two or more linear nozzle arrays, the nozzle arrays are optionally and preferably can be parallel to each other. When a printing head has two or more arrays of nozzles (*e.g.,* FIG. 2B) all arrays of the head can be fed with the same building material formulation, or at least two arrays of the same head can be fed with different building material formulations.

When a system similar to system **110** is employed, all printing heads **16** are optionally and preferably oriented along the indexing direction with their positions along the scanning direction being offset to one another.

When a system similar to system **10** is employed, all printing heads **16** are optionally and preferably oriented radially (parallel to the radial direction) with their azimuthal positions being offset to one another. Thus, in these embodiments, the nozzle arrays of different printing heads are not parallel to each other but are rather at an angle to each other, which angle being approximately equal to the azimuthal offset between the respective heads. For example, one head can be oriented radially and positioned at azimuthal position ϕ₁, and another head can be oriented radially and positioned at azimuthal position ϕ₂. In this example, the azimuthal offset between the two heads is ϕ₁-ϕ₂, and the angle between the linear nozzle arrays of the two heads is also ϕ₁-ϕ₂.

In some embodiments, two or more printing heads can be assembled to a block of printing heads, in which case the printing heads of the block are typically parallel to each other. A block including several inkjet printing heads 16a, 16b, 16c is illustrated in FIG. 2C.

In some embodiments, system 10 comprises a stabilizing structure 30 positioned below heads 16 such that tray 12 is between stabilizing structure 30 and heads 16. Stabilizing structure 30 may serve for preventing or reducing vibrations of tray 12 that may occur while inkjet printing heads 16 operate. In configurations in which printing heads 16 rotate about axis 14, stabilizing structure 30 preferably also rotates such that stabilizing structure 30 is always directly below heads 16 (with tray 12 between heads 16 and tray 12).

Tray 12 and/or printing heads 16 is optionally and preferably configured to move along the vertical direction z, parallel to vertical axis 14 so as to vary the vertical distance between tray 12 and printing heads 16. In configurations in which the vertical distance is varied by moving tray 12 along the vertical direction, stabilizing structure 30 preferably also moves vertically together with tray 12. In configurations in which the vertical distance is varied by heads 16 along the vertical direction, while maintaining the vertical position of tray 12 fixed, stabilizing structure 30 is also maintained at a fixed vertical position.

The vertical motion can be established by a vertical drive 28. Once a layer is completed, the vertical distance between tray 12 and heads 16 can be increased (e.g., tray 12 is lowered relative to heads 16) by a predetermined vertical step, according to the desired thickness of the layer subsequently to be printed. The procedure is repeated to form a three-dimensional object in a layerwise manner.

The operation of inkjet printing heads 16 and optionally and preferably also of one or more other components of system 10, *e.g.,* the motion of tray 12, are controlled by a controller 20. The controller can have an electronic circuit and a non-volatile memory medium readable by the circuit, wherein the memory medium stores program instructions which, when read by the circuit, cause the circuit to perform control operations as further detailed below.

Controller 20 can also communicate with a host computer 24 which transmits digital data pertaining to fabrication instructions based on computer object data, *e.g.,* in a form of a Standard Tessellation Language (STL) or a StereoLithography Contour (SLC) format, OBJ File format (OBJ), 3D Manufacturing Format (3MF), Virtual Reality Modeling Language (VRML), Additive Manufacturing File (AMF) format, Drawing Exchange Format (DXF), Polygon File Format (PLY) or any other format suitable for Computer-Aided Design (CAD). The object data formats are typically structured according to a Cartesian system of coordinates. In these cases, computer 24 preferably executes a procedure for transforming the coordinates of each slice in the computer object data from a Cartesian system of coordinates into a polar system of coordinates. Computer 24 optionally and preferably transmits the fabrication instructions in terms of the transformed system of coordinates. Alternatively, computer 24 can transmit the fabrication instructions in terms of the original system of coordinates as provided by the computer object data, in which case the transformation of coordinates is executed by the circuit of controller 20.

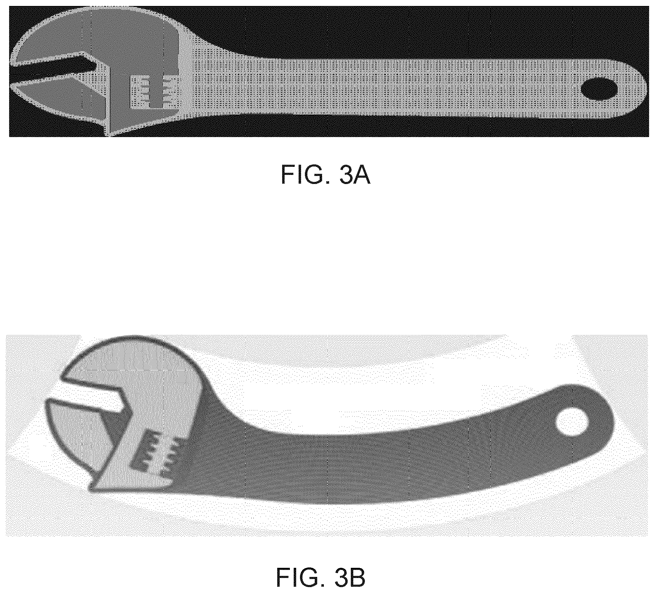

The transformation of coordinates allows three-dimensional printing over a rotating tray. In non-rotary systems with a stationary tray with the printing heads typically reciprocally move above the stationary tray along straight lines. In such systems, the printing resolution is the same at any point over the tray, provided the dispensing rates of the heads are uniform. In system 10, unlike non-rotary systems, not all the nozzles of the head points cover the same distance over tray 12 during at the same time. The transformation of coordinates is optionally and preferably executed so as to ensure equal amounts of excess material formulation at different radial positions. Representative examples of coordinate transformations according to some embodiments of the present invention are provided in FIGs. 3A-B, showing three slices of an object (each slice corresponds to fabrication instructions of a different layer of the objects), where FIG. 3A illustrates a slice in a Cartesian system of coordinates and FIG. 3B illustrates the same slice following an application of a transformation of coordinates procedure to the respective slice.

Typically, controller 20 controls the voltage applied to the respective component of the system 10 based on the fabrication instructions and based on the stored program instructions as described below.

Generally, controller 20 controls printing heads 16 to dispense, during the rotation of tray 12, droplets of building material formulation in layers, such as to print a three-dimensional object on tray 12.

System 10 optionally and preferably comprises one or more radiation sources 18, which can be, for example, an ultraviolet or visible or infrared lamp, or other sources of electromagnetic radiation, or electron beam source, depending on the modeling material formulation being used. Radiation source can include any type of radiation emitting device, including, without limitation, light emitting diode (LED), digital light processing (DLP) system, resistive lamp and the like. Radiation source 18 serves for curing or solidifying the modeling material formulation. In various exemplary embodiments of the invention the operation of radiation source 18 is controlled by controller 20 which may activate and deactivate radiation source 18 and may optionally also control the amount of radiation generated by radiation source 18.

In some embodiments of the invention, system 10 further comprises one or more leveling devices 32 which can be manufactured as a roller or a blade. Leveling device 32 serves to straighten the newly formed layer prior to the formation of the successive layer thereon. In some embodiments, leveling device 32 has the shape of a conical roller positioned such that its symmetry axis 34 is tilted relative to the surface of tray 12 and its surface is parallel to the surface of the tray. This embodiment is illustrated in the side view of system 10 (FIG. 1C).

The conical roller can have the shape of a cone or a conical frustum.

The opening angle of the conical roller is preferably selected such that there is a constant ratio between the radius of the cone at any location along its axis 34 and the distance between that location and axis 14. This embodiment allows roller 32 to efficiently level the layers, since while the roller rotates, any point p on the surface of the roller has a linear velocity which is proportional *(e.g.,* the same) to the linear velocity of the tray at a point vertically beneath point *p.* In some embodiments, the roller has a shape of a conical frustum having a height *h,* a radius R₁ at its closest distance from axis 14, and a radius R₂ at its farthest distance from axis 14, wherein the parameters *h, R₁* and *R*₂ satisfy the relation *R*₁/*R*₂=(*R-h*)/*h* and wherein R is the farthest distance of the roller from axis 14 (for example, R can be the radius of tray 12).

The operation of leveling device 32 is optionally and preferably controlled by controller 20 which may activate and deactivate leveling device 32 and may optionally also control its position along a vertical direction (parallel to axis 14) and/or a radial direction (parallel to tray 12 and pointing toward or away from axis 14.

In some embodiments of the present invention printing heads 16 are configured to reciprocally move relative to tray along the radial direction r. These embodiments are useful when the lengths of the nozzle arrays 22 of heads 16 are shorter than the width along the radial direction of the working area 26 on tray 12. The motion of heads 16 along the radial direction is optionally and preferably controlled by controller 20.

Some embodiments contemplate the fabrication of an object by dispensing different material formulations from different arrays of nozzles (belonging to the same or different printing head). These embodiments provide, *inter alia,* the ability to select material formulations from a given number of material formulations and define desired combinations of the selected material formulations and their properties. According to the present embodiments, the spatial locations of the deposition of each material formulation with the layer is defined, either to effect occupation of different three-dimensional spatial locations by different material formulations, or to effect occupation of substantially the same three-dimensional location or adjacent three-dimensional locations by two or more different material formulations so as to allow post deposition spatial combination of the material formulations within the layer, thereby to form a composite material formulation at the respective location or locations.

Any post deposition combination or mix of modeling material formulations is contemplated. For example, once a certain material formulation is dispensed it may preserve its original properties. However, when it is dispensed simultaneously with another modeling material formulation or other dispensed material formulations which are dispensed at the same or nearby locations, a composite material formulation having a different property or properties to the dispensed material formulations may be formed.

In some embodiments of the present invention the system dispenses digital material formulation for at least one of the layers.

The phrase "digital material formulations", as used herein and in the art, describes a combination of two or more material formulations on a pixel level or voxel level such that pixels or voxels of different material formulations are interlaced with one another over a region. Such digital material formulations may exhibit new properties that are affected by the selection of types of material formulations and/or the ratio and relative spatial distribution of two or more material formulations.

As used herein, a "voxel" of a layer refers to a physical three-dimensional elementary volume within the layer that corresponds to a single pixel of a bitmap describing the layer. The size of a voxel is approximately the size of a region that is formed by a building material, once the building material is dispensed at a location corresponding to the respective pixel, leveled, and solidified.

The present embodiments thus enable the deposition of a broad range of material formulation combinations, and the fabrication of an object which may consist of multiple different combinations of material formulations, in different parts of the object, according to the properties desired to characterize each part of the object.

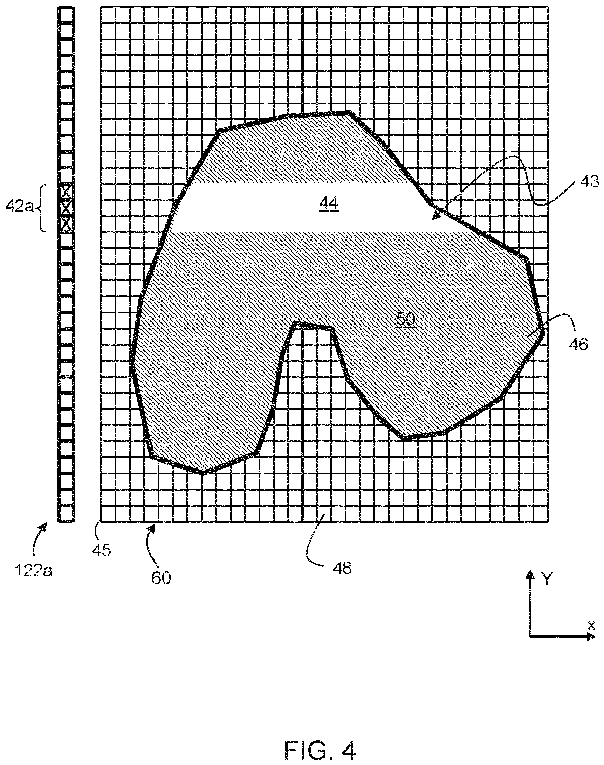

It is recognized that imperfections in the fabricated object may occur, for example, when one or more nozzles of the dispensing head are wholly or partially blocked, defective or non-functional. FIG. 4 is a schematic illustration of an array of nozzles **122a** in which there are three defective nozzles, designated by numeral **42a.** Also illustrated in FIG. 4 is a top view of a layer **50** formed of occupied locations **46** dispensed by nozzles **122a,** and a bitmap **60** defined with respect to a reference frame having an origin **45.** For better understanding of the relationship between layer **50** and bitmap **60,** layer **50** overlays bitmap **60.** The elements of bitmap **60** which are not overlaid by layer **50** represent void locations **48.** It is to be understood that in reality there is no overlaying relation between layer **50** and bitmap **60,** because layer **50** is a physical object while bitmap **60** is virtual. Nevertheless, both occupied locations **46** and void locations **48** correspond to physical locations on layer **50.**

FIG. 4 shows layer **50** as formed when the relative motion between the dispensing heads and the tray during the dispensing of building material formulation is along a straight line *(*e.g., using system **110**). The skilled person, provided with the details described herein, would know how to adjust the drawing to the case of a rotary relative motion *(*e.g., when layer **50** is formed using system **10**).

When the dispensing head includes one or more defective nozzles **42a,** there is an insufficient amount of, or no, building material in target locations visited by the defective nozzles. Such target locations are referred to herein as "defective locations", and are designated in FIG. 4 by reference numeral **44.** Note that not all target locations which are not occupied by building material are defective. One of ordinary skill in the art would appreciate the difference between defective locations **44** and void locations **48,** the latter being defined as target locations which are not designated to be occupied by building material.

As illustrated in FIG. 4, the existence of defective nozzles **42a** results in the formation of defective sectors **43** of missing or insufficient building material over layer **50.**

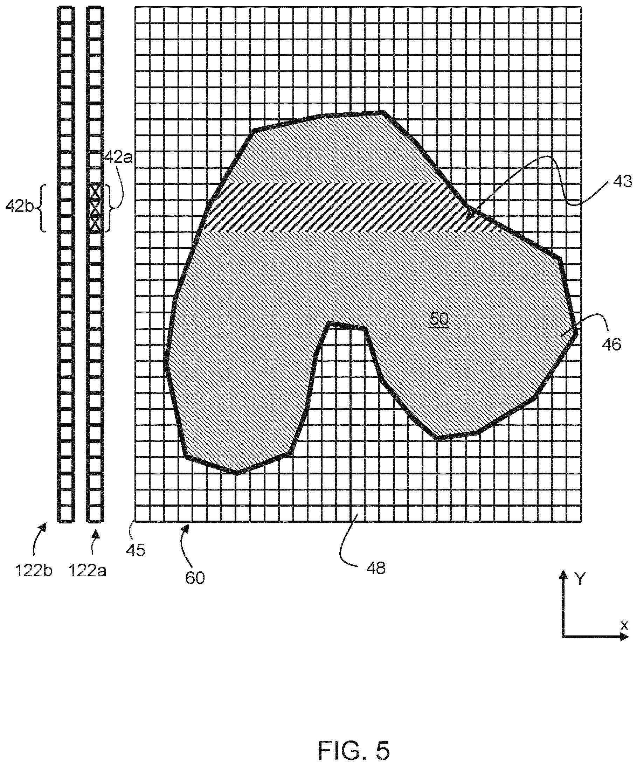

FIG. 5 is a schematic illustration of a situation in which there are two aligned arrays **122a** and **122b.** The nozzles **42a** of array **122a** are defective, as in FIG. 4. The nozzles of array **122b** that are aligned with defective nozzles **42a** are shown at **42b.** Suppose that nozzles **42b** function properly (not defective). When both arrays **122a** and **122b** are instructed to form layer **50,** nozzles **42b** dispense the appropriate amount of building material formulation in sector **43,** but defective nozzles **42a** either do not dispense building material formulation at all, or dispense an insufficient amount of building material formulation. As a result, there is typically a lesser amount of material in sector **43** than in the other sectors of layer **50.** When arrays **122a** and **122b** dispense different types of building material formulations, the ratio between the formulations dispensed at sector **43** is different than the intended ratio, resulting in a final object in which the properties at sector **43** are different than the pre-designed properties.

For example, when arrays **122a** and **122b** dispense building material formulations of different colors, the existence of defective nozzles **42a** in array **122a** may cause color errors since a reduced or no dispensing of a modeling material of a particular color from defective nozzles **42a** reduces the relative proportion of that particular color in sector **43.** As a representative example, suppose that nozzles of array **122b** are dispensing yellow material and the nozzles of array **122a** are dispensing cyan material, thus collectively forming a color that is perceived as green. When one or more of the nozzles of array **122a** (*e.g*., nozzles **42a**) is defective, the formed color at sector **43** is perceived is more yellowish than desired, since it has larger relative amount of yellow. Since this error is typically local, the overall color of the object may appear nonuniform (yellowish spots or islands within a green region, in the present example).

Another example is when arrays **122a** and **122b** dispense building material formulations of different mechanical, electrical, and/or magnetic properties. In this case the existence of defective nozzles **42a** in array **122a** may cause errors in the mechanical, electrical, and/or magnetic properties since a reduced or no dispensing of a material of a particular property from defective nozzles **42a** reduces the relative proportion of that particular property in sector **43.**

Conventional solutions for the problem of defective nozzle adopt an additive compensation approach wherein the functioning nozzles **42b** are used to dispense more material at, above, or near locations which a defective nozzle failed to occupy with material. The Inventor found that such an approach can solve the problem, when the functioning nozzles **42b** dispense the same type of material. However, when the functioning nozzles **42b** dispense a different type of material, such a solution may result in an unwanted ratio between the material dispensed by nozzles in array **122a** and the material dispensed by nozzles in array **122b.**

The inventor has therefore realized that the conventional additive compensation approach has a drawback, since it is necessary to have both arrays **122a** and **122b** configured to dispense the same material. Such a requirement reduces the number of different material formulations that can be used by a system that has a given number of nozzle arrays.

The Inventor has devised a technique that successfully addresses the problem associated with defective or non-functional nozzles, and that can be employed even when different arrays of nozzles dispense different types of material formulations. The Inventor discovered that the inventive technique can be employed in additive manufacturing of three-dimensional objects, as well as in two-dimensional printing of 2D objects such as text or images.

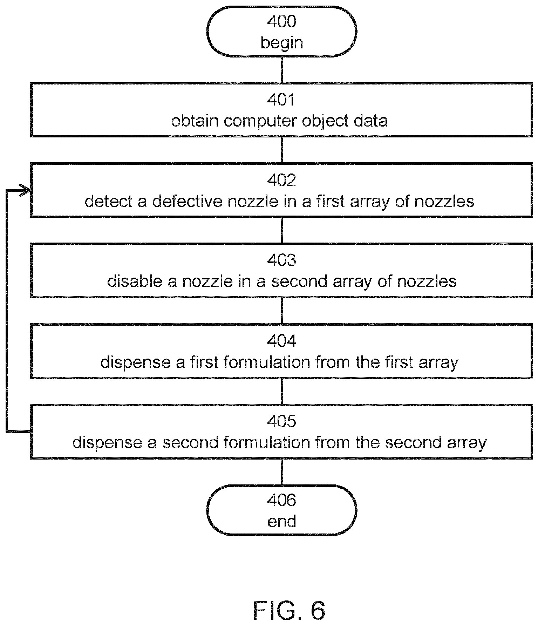

FIG. 6 is a flowchart diagram of a printing method, according to various exemplary embodiments of the present invention. It is to be understood that, unless otherwise defined, the operations described hereinbelow can be executed either contemporaneously or sequentially in many combinations or orders of execution. Specifically, the ordering of the flowchart diagrams is not to be considered as limiting. For example, two or more operations, appearing in the following description or in the flowchart diagrams in a particular order, can be executed in a different order (e.g., a reverse order) or substantially contemporaneously. Additionally, several operations described below are optional and may not be executed.

The method is preferably executed using building material formulations suitable for additive manufacturing of a three-dimensional object. Alternatively, the method can be executed using ink suitable for inkjet printing of two-dimensional objects.

When the method is executed for additive manufacturing of a three-dimensional object, one or more of the operations described below can be performed by an AM system, such as, but not limited to, system **10** or system **110,** wherein the controller **20** is optionally and preferably configured to transmit control signals as further detailed hereinabove so as to the execute the respective operation. When the method is executed for inkjet printing of two-dimensional objects, one or more of the operations can be executed using any type of printer having more than one array of inkjet nozzles.

For conciseness of presentation, the embodiments below are described mainly for the preferred case of AM of a three-dimensional object. It is to be understood that selected operations are also suitable for two-dimensional printing, by using inks instead of building material formulations.

Computer programs implementing the method can commonly be distributed to users on a distribution medium such as, but not limited to, a flash memory, CD-ROM, or a remote medium communicating with a local computer over the internet. From the distribution medium, the computer programs can be copied to a hard disk or a similar intermediate storage medium. The computer programs can be run by loading the computer instructions either from their distribution medium or their intermediate storage medium into the execution memory of the computer, configuring the computer to act in accordance with the method. All these operations are well-known to those skilled in the art of computer systems.

The method can be embodied in many forms. For example, it can be embodied on a tangible medium such as a computer for performing the method steps. It can be embodied on a computer readable medium, comprising computer readable instructions for carrying out the method steps. In can also be embodied in electronic device having digital computer capabilities arranged to run the computer program on the tangible medium or execute the instruction on a computer readable medium.

The method begins at **400** and optionally and preferably continues to **401** at which computer data are received. Preferably, the computer object data collectively pertain to a three-dimensional shape of the object, but can also pertain to two-dimensional objects, if desired.

The data can be received by a data processor (*e.g*., processor **24**) operatively associated with the AM system. For example, the data processor can access a computer-readable storage medium (not shown) and retrieve the data from the medium. The data processor can also generate the data, or a portion thereof, instead of, or in addition to, retrieving data from the storage medium, for example, by means of a computer aided design (CAD) or computer aided manufacturing (CAM) software. For example, the data processor can receive the computer object data that correspond to the object to be manufactured, and generate the computer object data that correspond to the sacrificial structure.

When the method is executed for AM of a three-dimensional object, the computer object data typically includes a plurality of slice data each defining a layer of the object to be manufactured. The data processor can transfer the data, or a portion thereof, to the controller of the AM system. Typically, but not necessarily, the controller receives the data on a slice-by-slice basis.

The data can be in any data format known in the art, including, any of the aforementioned computer object data formats.

The method optionally and preferably continues to **402** at which a defective nozzle in a first array of nozzles is detected. This can be done in more than one way.

In some embodiments of the present invention a nozzle test procedure is executed periodically. The present embodiments contemplate a nozzle test procedure in which the dispensing head dispenses test droplet series for each nozzle, forming a test pattern **62** (see FIGs. 1A and 1B) for each nozzle. The test pattern can be inspected to determine if the respective nozzle is defective when there are irregularities in the pattern (in case the respective nozzle functions partially), or when no pattern exists (in case of a complete blockage of the respective nozzle), or otherwise, that the respective is fully operative. The test pattern can be dispensed on the tray of the system, on a paper sheet, or on another suitable medium, preferably outside the region in which the 3D object is manufactured or the 2D object is printed. The test pattern can be inspected by the operator, or, more preferably by a droplet detector system **64,** such as, but not limited to, an optical system that analyzes pattern **62** to detect, for each nozzle, whether the pattern exists and whether there are irregularities in the pattern. The optical system can be positioned above the tray, as illustrated in FIGs. 1A and 1B. The optical system can include an imaging system or an optical scanner that captures an image of pattern **62** and performs the analysis of pattern **64** by means of image processing.

The present embodiments also contemplate a nozzle test procedure in which the dispensing head dispenses test droplets in nozzle-by-nozzle sequence into a waste container **66.** In these embodiments, droplet detector system **64** can be an optical system (*e.g.*, an imaging device or an optical scanner) positioned on or near the tray of the AM system (see FIG. 1A) to receive a view of the orifice plate of the dispensing heads, and configured to analyze the droplets while emerging from each nozzle. Also contemplated are embodiments in which system **64** is configured to weigh container **66** wherein the determination if the respective nozzle is defective is based on the difference in the weight of container **64** before and after the dispensing. In these embodiments system **64** can comprise, for example, a load cell.

In some embodiments of the present invention, droplet detector system **64** is an optical system (*e.g.*, an imaging system or a scanner) positioned to receive a view of the droplets once dispensed to fabricate the 3D or 2D object. In these embodiments droplet detector system **64** is preferably positioned above the tray (*e.g.*, on the printing block **128**) to receive a side view of the dispensed droplets.

In any of the embodiments in which droplet detector system **64** is employed, at least part of the analysis can be performed by the controller or data processor of the AM system.

When operation **402** is not executed, information pertaining to the defective nozzles is optionally and preferably received, for example, from the data processor or from the AM system. The data processor can receive this information from the user interface.

The method optionally and preferably continues to **403** at which a nozzle is disabled in a second array of nozzles, where the second array is different from the first array. This operation is optionally and preferably performed by the controller of the AM system. The nozzle to be disabled is optionally and preferably selected to as to locally maintain a ratio between the building material formulations dispensed by the two arrays. For example, suppose that the first array dispenses a first formulation and the second array dispenses a second formulation. Suppose further that it is desired to fabricate a particular region of an object in which voxels of the first formulation are interlaced with voxels of the second formulation at a p:q ratio, so that an area of the layer that includes p+q voxels has p voxels of the first formulations and p voxels of the second formulation (e.g., in an interlaced arrangement therebetween). Suppose in addition that k₁ of the nozzles of the first array that are to dispense the first formulation in the particular region are defective. In this case, the method optionally and preferably disables k₂ of the nozzles of the second array that are to dispense the second formulation in the particular region, where k₂ is selected such that |(p-k₁)/(q-k₂)| is sufficiently close to p/q (*e.g.,* with a tolerance of less than 20% or less than 10% or less than 5% from p/q).

Preferably, the array pitch of the nozzle that is disabled at **403** is at the same or approximately the same array pitch of the defective nozzle, except that it belongs to a different array.

As used herein, "array pitch" of a nozzle refers to a location of the nozzle along the indexing direction, in dimensionless units corresponding to the distance between adjacent nozzles in the array. Thus, for example, the first nozzle of an array along the indexing direction has an array pitch 1, the second nozzle of an array along the indexing direction has an array pitch 2, etc.

In various exemplary embodiments of the invention the difference between the array pitch of the nozzle that is disabled at **403** and the array pitch of the defective nozzle, in absolute value, is 5 or less, or 3 or less, or 2 or less, or 1 or less, *e.g.,* 0. For example, referring again to FIG. 5, when nozzles **42a** of array **122a** are found to be defective (*e.g.,* by executing operation **402**)**,** nozzles **42b,** which have the same locations along array **122b** as the locations of nozzles **42a** along array **122a,** are disabled at **403.**

According to preferred embodiments of the present invention, the nozzle that is disabled at **403** is not a defective nozzle (namely a fully functioning nozzle).

The method proceeds to **404** at which a first building material formulation is dispensed from non-defective nozzles of the first array, and to **405** at which a second building material formulation is dispensed from non-disabled nozzles of the second array. In some embodiments of the present invention the first and the second formulations are of different colors. In some embodiments of the present invention the first and the second formulations are of different mechanical properties (*e.g.*, rigidity, flexibility, hardness, elasticity, and/or other properties).

Operations **404** and **405** can be executed simultaneously or serially, and are optionally and preferably continued until the final 2D object is printed, or continued in a layer-wise manner until a final 3D object is fabricated. Optionally, the method loops back to **402** at least once before the 2D or 3D object is completed, so as to determine whether or not there is a change in the number of defective nozzles.

The method ends at **406.**

The method as shown in FIG. 6 is advantageous since it reduces the likelihood for non-uniformities in the ratio between the formulations (e.g., color non-uniformities) while maintaining flexibility in selecting the number of nozzle arrays that are used to dispense each color. Unlike the conventional solution for handling the defective nozzles problem, the solution according to preferred embodiments of the present invention employs a subtractive approach wherein nozzles that are otherwise functional are disabled to maintain the relative amounts of the dispensed materials.

The word "exemplary" is used herein to mean "serving as an example, instance or illustration." Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments." Any particular embodiment of the invention may include a plurality of "optional" features unless such features conflict.

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

### EXAMPLES

Reference is now made to the following examples, which together with the above descriptions illustrate some embodiments of the invention in a non-limiting fashion.

Experiments were performed to investigate the ability of the technique of the present embodiments to reduce color non-uniformities.

A block, about 90 mm in length (along the x direction), about 40 mm in width (along the y direction), and about 10 mm in height (along the z direction) was printed using a three-dimensional inkjet printing system marketed by Stratasys^{®} Ltd., Israel, under the tradename Stratasys J750^{™}.

The printing system was operated to fabricate the block by dispensing two material formulations in a manner that, for example, voxels in which cyan color was dispensed were interlaced with voxels in which yellow color was dispensed, forming a digital material formulation perceived as green. The ratio of cyan to yellow is predetermined according to the shade of green desired to be obtained. Optionally, in this example, a single voxel may include both droplets of cyan and droplets of yellow in a pre-determined ratio according to the shade of green desired and/or the size of the voxel.

The colors were printed along the x direction. The y offset between the nozzles that dispensed cyan formulation and the nozzles that dispensed yellow formulation were less than 0.1 mm.

The array of nozzles dispensing the cyan formulation had several defective nozzles. When the block was printed without disabling nozzles dispensing the yellow formulation, significant color uniformity (bluish regions) was observed.

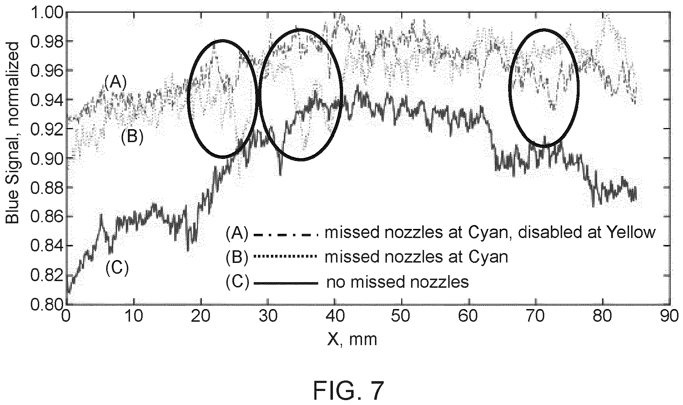

The defective nozzles in the array were identified by their indices. The block was then printed while disabling operation of the nozzles in the array of nozzles dispensing the yellow formulation. The disabled nozzles had the same indices as the indices of the defective nozzles. The results are shown in FIG. 7 which shows distributions of the blue signal at the images of the block printed with (dash-dot line A) and without (dotted line B) disabling the functioning nozzles dispensing the yellow formulation. The solid line (C) shows a control case in which there are no defective nozzles and no nozzle was disabled. The solid line has been shifted down for clarity of presentation. FIG. 7 demonstrates that color uniformity was improved by disabling functioning nozzles as described hereinabove.

## Claims

1. A method of printing using an inkjet printing system (110) having plurality of linear arrays of nozzles, the method comprising:
detecting a defective nozzle (42a) in a first array of nozzles;
disabling a nozzle (403) in a second array of nozzles, wherein a location of said defective nozzle (42a) along said first array, and a location of said disabled nozzle along said second array of nozzles, are within 0 to 5 array pitch units from each other;
dispensing a first material formulation from nozzles of said first array, other than said defective nozzles (42a); and
dispensing a second material formulation from nozzles of said second array, other than said disabled nozzle (403).

2. The method according to claim 1, being executed for interlacing said material formulations to form voxels of said first formulation that are interlaced with voxels of said second formulation at a predetermined ratio, wherein the method further comprises selecting said nozzle in said second array such that a ratio between numbers of voxels dispensed by said nozzles of said first and said second arrays, excluding said defective nozzle and said disabled nozzle, is within less than 20% away from said predetermined ratio.

3. The method according to any of claims 1 and 2, comprising detecting a plurality of defective nozzles in said first array of nozzles, disabling a plurality of nozzles in said second array of nozzles; dispensing said first material formulation from nozzles of said first array, other than said defective nozzles; and dispensing said second material formulation from nozzles of said second array, other than said disabled nozzles.

4. The method according to any of claims 1-3, wherein said first material formulation and said second material formulation are of different colors, have different mechanical properties, have different electrical properties, or have different magnetic properties.

5. The method according to any of claims 1-4, wherein said first array of nozzles and said second array of nozzles are both located in one dispensing head.

6. The method according to any of claims 1-4, wherein said first array of nozzles is located in a first dispensing head, and said second array of nozzles is located in a second dispensing head.

7. The method according to any of claims 1-6, comprising detecting an additional defective nozzle intermittently with said dispensing of said first and said second material formulations.

8. The method according to any of claims 1-7, wherein said detecting is executed automatically by an optical scanner.

9. An inkjet printing system (110), comprising:
a plurality of linear arrays of nozzles; and
a controller (20) configured for receiving information pertaining to a defective nozzle (42a) in a first array of nozzles, for disabling a nozzle (403) in a second array of nozzles, and for controlling said first array to dispense a first material formulation from nozzles of said first array, other than said defective nozzle (42a), and for controlling said second array to dispense a second material formulation from nozzles of said second array, other than said disabled nozzle (403), **characterized in that** a location of said defective nozzle (42a) along said first array, and a location of said disabled nozzle (403) along said second array of nozzles, are within 0 to 5 array pitch units from each other.

10. The system of claim 9, comprising:
an optical scanner; and
an image processor configured for receiving scans from said optical scanner, processing said scans to detect said defective nozzle in said first array of nozzles, and transmitting said information to said controller.

11. The system according to any of claims 9 and 10, wherein said controller is configured to interlace said material formulations to form voxels of said first formulation that are interlaced with voxels of said second formulation at a predetermined ratio, and to select said nozzle in said second array such that a ratio between numbers of voxels dispensed by said nozzles of said first and said second arrays, excluding said defective nozzle and said disabled nozzle, is within less than 20% away from said predetermined ratio.

12. The system according to any of claims 9-11, wherein said first array of nozzles and said second array of nozzles are both located in one dispensing head.

13. The system according to any of claims 9-12, wherein said first array of nozzles is located in a first dispensing head, and said second array of nozzles is located in a second dispensing head.

14. The system according to any of claims 9-13, being a three-dimensional inkjet printing system, wherein said first and said second material formulations, are respectively a first and a second building material formulations.

15. The system according to any of claims 9-14, being a two-dimensional inkjet printing system, and said first and said second material formulations, are respectively a first and a second ink material formulations.

## Patentansprüche

1. Ein Verfahren zum Drucken unter Verwendung eines Tintenstrahldrucksystems (110), das eine Vielzahl von linearen Anordnungen von Düsen aufweist, wobei das Verfahren Folgendes umfasst:
Detektieren einer defekten Düse (42a) in einer ersten Anordnung von Düsen;
Deaktivieren einer Düse (403) in einer zweiten Anordnung von Düsen, wobei eine Lage der genannten defekten Düse (42a) entlang der genannten ersten Anordnung und eine Lage der genannten deaktivierten Düse entlang der genannten zweiten Anordnung von Düsen innerhalb von 0 bis 5 Anordnungsabstandseinheiten voneinander liegen;
Ausgeben einer ersten Materialformulierung aus Düsen der genannten ersten Anordnung, abgesehen von den genannten defekten Düsen (42a); und
Ausgeben einer zweiten Materialformulierung aus Düsen der genannten zweiten Anordnung, abgesehen von der genannten deaktivierten Düse (403).

2. Das Verfahren gemäß Anspruch 1, das zum Vernetzen der genannten Materialformulierungen ausgeführt wird, um Voxel der genannten ersten Formulierung zu bilden, die mit Voxeln der genannten zweiten Formulierung in einem vorbestimmten Verhältnis vernetzt werden, wobei das Verfahren ferner das Auswählen der genannten Düse in der genannten zweiten Anordnung umfasst, sodass ein Verhältnis zwischen der Zahl von Voxeln, die durch die genannten Düsen der genannten ersten und zweiten Anordnung ausgegeben werden, abgesehen von der genannten defekten Düse und der genannten deaktivierten Düse, um weniger als 20 % von dem genannten vorbestimmten Verhältnis abweicht.

3. Das Verfahren gemäß einem der Ansprüche 1 und 2, das Folgendes umfasst: Detektieren einer Vielzahl von defekten Düsen in der genannten ersten Anordnung von Düsen, Deaktivieren einer Vielzahl von Düsen in der genannten zweiten Anordnung von Düsen; Ausgeben der genannten ersten Materialformulierung aus Düsen der genannten ersten Anordnung, abgesehen von den genannten defekten Düsen; und Ausgeben der zweiten Materialformulierung aus Düsen der genannten zweiten Anordnung, abgesehen von den genannten deaktivierten Düsen.

4. Das Verfahren gemäß einem der Ansprüche 1-3, wobei die genannte erste Materialformulierung und die genannte zweite Materialformulierung unterschiedliche Farben sind, unterschiedliche mechanische Eigenschaften aufweisen, unterschiedliche elektrische Eigenschaften aufweisen oder unterschiedliche magnetische Eigenschaften aufweisen.

5. Das Verfahren gemäß einem der Ansprüche 1-4, wobei sowohl die genannte erste Anordnung als auch die genannte zweite Anordnung von Düsen in einem Ausgabekopf liegen.

6. Das Verfahren gemäß einem der Ansprüche 1-4, wobei die genannte erste Anordnung von Düsen in einem ersten Ausgabekopf liegt und die genannte zweite Anordnung von Düsen in einem zweiten Ausgabekopf liegt.

7. Das Verfahren gemäß einem der Ansprüche 1-6, das das Detektieren einer zusätzlichen defekten Düse intermittierend mit dem genannten Ausgeben der genannten ersten und der genannten zweiten Materialformulierung umfasst.

8. Das Verfahren gemäß einem der Ansprüche 1-7, wobei das genannte Detektieren durch einen optischen Scanner automatisch ausgeführt wird.

9. Ein Tintenstrahldrucksystem (110), das Folgendes umfasst:
eine Vielzahl von linearen Anordnungen von Düsen; und
eine Steuereinheit (20), die für Folgendes konfiguriert ist: Empfangen von Informationen, die zu einer defekten Düse (42a) in einer ersten Anordnung von Düsen gehören, Deaktivieren einer Düse (403) in einer zweiten Anordnung von Düsen und Steuern der genannten ersten Anordnung, um eine erste Materialformulierung aus Düsen der genannten ersten Anordnung, abgesehen von der genannten defekten Düse (42a), auszugeben, und Steuern der genannten zweiten Anordnung, um eine zweite Materialformulierung aus Düsen der genannten zweiten Anordnung, abgesehen von der genannten deaktivierten Düse (403), auszugeben, **gekennzeichnet dadurch, dass** eine Lage der genannten defekten Düse (42a) entlang der genannten ersten Anordnung und eine Lage der genannten deaktivierten Düse (403) entlang der genannten zweiten Anordnung von Düsen innerhalb von 0 bis 5 Anordnungsabstandseinheiten voneinander liegen.

10. Das System nach Anspruch 9, das Folgendes umfasst:
einen optischen Scanner; und
einen Bildprozessor, der für Folgendes konfiguriert ist: Empfangen von Scans von dem genannten optischen Scanner, Verarbeiten der Scans, um die genannte defekte Düse in der genannten ersten Anordnung von Düsen zu detektieren, und Übertragen der genannten Informationen an die genannte Steuereinheit.

11. Das System gemäß einem der Ansprüche 9 und 10, wobei die genannte Steuereinheit für Folgendes konfiguriert ist: Vernetzen der genannten Materialformulierungen, um Voxel der genannten ersten Formulierung zu bilden, die mit Voxeln der genannten zweiten Formulierung in einem vorbestimmten Verhältnis vernetzt werden, und Auswählen der genannten Düse in der genannten zweiten Anordnung, sodass ein Verhältnis zwischen der Zahl von Voxeln, die durch die genannten Düsen der genannten ersten und zweiten Anordnung ausgegeben werden, abgesehen von der genannten defekten Düse und der genannten deaktivierten Düse, um weniger als 20 % von dem genannten vorbestimmten Verhältnis abweicht.

12. Das System gemäß einem der Ansprüche 9-11, wobei sowohl die genannte erste Anordnung als auch die genannte zweite Anordnung von Düsen in einem Ausgabekopf liegen.

13. Das System gemäß einem der Ansprüche 9-12, wobei die genannte erste Anordnung von Düsen in einem ersten Ausgabekopf liegt und die genannte zweite Anordnung von Düsen in einem zweiten Ausgabekopf liegt.

14. Das System gemäß einem der Ansprüche 9-13, das ein dreidimensionales Tintenstrahldrucksystem ist, wobei die genannte erste und die genannte zweite Materialformulierung eine erste bzw. eine zweite Baumaterialformulierung sind.

15. Das System gemäß einem der Ansprüche 9-14, das ein zweidimensionales Tintenstrahldrucksystem ist, und wobei die genannte erste und die genannte zweite Materialformulierung eine erste bzw. eine zweite Tintenmaterialformulierung sind.

## Revendications

1. Procédé d'impression au moyen d'un système d'impression à jet d'encre (110) comportant une pluralité de réseaux linéaires de buses, le procédé consistant à :
détecter une buse défectueuse (42a) dans un premier réseau de buses ;
désactiver une buse (403) dans un second réseau de buses, un emplacement de ladite buse défectueuse (42a) selon ledit premier réseau et un emplacement de ladite buse désactivée selon ledit second réseau de buses étant distants de 0 à 5 unités de pas de réseau l'un de l'autre ;
distribuer une première formulation de matériaux par des buses dudit premier réseau, autres que ladite buse défectueuse (42a) ; et
distribuer une seconde formulation de matériaux par des buses dudit second réseau, autres que ladite buse désactivée (403).

2. Procédé selon la revendication 1, exécuté pour entrelacer lesdites formulations de matériaux afin de former des voxels de ladite première formulation qui sont entrelacés avec des voxels de ladite seconde formulation selon un rapport prédéterminé, le procédé consistant en outre à sélectionner ladite buse dans ledit second réseau de sorte qu'un rapport entre des nombres de voxels distribués par lesdites buses desdits premier et second réseaux, à l'exclusion de ladite buse défectueuse et de ladite buse désactivée, s'écarte de moins de 20 % dudit rapport prédéterminé.

3. Procédé selon l'une quelconque des revendications 1 et 2, consistant à détecter une pluralité de buses défectueuses dans ledit premier réseau de buses et à désactiver une pluralité de buses dans ledit second réseau de buses ; à distribuer ladite première formulation de matériaux par des buses dudit premier réseau, autres que lesdites buses défectueuses ; et à distribuer ladite seconde formulation de matériaux par des buses dudit second réseau, autres que lesdites buses désactivées.

4. Procédé selon l'une quelconque des revendications 1 à 3, dans lequel ladite première formulation de matériaux et ladite seconde formulation de matériaux sont de couleurs différentes, ont des propriétés mécaniques différentes, ont des propriétés électriques différentes ou ont des propriétés magnétiques différentes.

5. Procédé selon l'une quelconque des revendications 1 à 4, dans lequel ledit premier réseau de buses et ledit second réseau de buses sont tous deux situés dans une seule tête de distribution.

6. Procédé selon l'une quelconque des revendications 1 à 4, dans lequel ledit premier réseau de buses est situé dans une première tête de distribution et ledit second réseau de buses est situé dans une seconde tête de distribution.

7. Procédé selon l'une quelconque des revendications 1 à 6, consistant à détecter une buse défectueuse supplémentaire de manière intermittente lors de la distribution desdites première et seconde formulations de matériaux.

8. Procédé selon l'une quelconque des revendications 1 à 7, dans lequel ladite détection est exécutée automatiquement par un lecteur optique.

9. Système d'impression à jet d'encre (110), comprenant :
une pluralité de réseaux linéaires de buses ; et
un dispositif de commande (20) configuré pour recevoir des informations relatives à une buse défectueuse (42a) dans un premier réseau de buses, pour désactiver une buse (403) dans un second réseau de buses et pour commander ledit premier réseau afin de distribuer une première formulation de matériaux par des buses dudit premier réseau, autres que ladite buse défectueuse (42a), et pour commander ledit second réseau afin de distribuer une seconde formulation de produit matériaux par des buses dudit second réseau, autres que ladite buse désactivée (403), le système étant **caractérisé en ce qu'**un emplacement de ladite buse défectueuse (42a) selon ledit premier réseau et un emplacement de ladite buse désactivée (403) selon ledit second réseau de buses sont distants de 0 à 5 unités de pas de réseau l'un de l'autre.

10. Système selon la revendication 9, comprenant :
un lecteur optique ; et
un processeur d'images configuré pour recevoir des lectures en provenance dudit lecteur optique, pour traiter lesdites lectures afin de détecter ladite buse défectueuse dans ledit premier réseau de buses et pour transmettre lesdites informations au dispositif de commande.

11. Système selon l'une quelconque des revendications 9 et 10, dans lequel ledit dispositif de commande est configuré pour entrelacer lesdites formulations de matériaux afin de former des voxels de ladite première formulation qui sont entrelacés avec des voxels de ladite seconde formulation selon un rapport prédéterminé, et pour sélectionner ladite buse dans ledit second réseau de sorte qu'un rapport entre des nombres de voxels distribués par lesdites buses desdits premier et second réseaux, à l'exclusion de ladite buse défectueuse et de ladite buse désactivée, s'écarte de moins de 20 % dudit rapport prédéterminé.

12. Système selon l'une quelconque des revendications 9 à 11, dans lequel ledit premier réseau de buses et ledit second réseau de buses sont tous deux situés dans une seule tête de distribution.

13. Système selon l'une quelconque des revendications 9 à 12, dans lequel ledit premier réseau de buses est situé dans une première tête de distribution et ledit second réseau de buses est situé dans une seconde tête de distribution.

14. Système selon l'une quelconque des revendications 9 à 13, le système étant un système d'impression tridimensionnelle à jet d'encre, lesdites première et seconde formulations de matériaux étant respectivement des première et seconde formulations de matériaux de construction.

15. Système selon l'une quelconque des revendications 9 à 14, le système étant un système d'impression bidimensionnelle à jet d'encre et lesdites première et seconde formulations de matériaux sont respectivement des première et seconde formulations de matériaux d'encre.
